Europäisches Patentamt

European Patent Office

Office européen des brevets

(11) Numéro de publication: **0 236 197 B1**

(12) **FASCICULE DE BREVET EUROPEEN**

(45) Date de publication de fascicule du brevet:
27.03.91

(51) Int. Cl.⁵: **G05D 16/20, B62D 5/06**

(21) Numéro de dépôt: **87400312.2**

(22) Date de dépôt: **12.02.87**

(54) Servorégulateur de pression.

(30) Priorité: **26.02.86 FR 8602648**

(43) Date de publication de la demande:
**09.09.87 Bulletin 87/37**

(45) Mention de la délivrance du brevet:
**27.03.91 Bulletin 91/13**

(84) Etats contractants désignés:
**DE ES GB IT**

(56) Documents cités:
**EP-A- 0 093 416**
**US-A- 4 216 841**
**US-A- 4 370 856**
**US-A- 4 570 736**

(73) Titulaire: **BENDIX EUROPE Services Techniques S.A.**
**126 rue de Stalingrad**
**F-93700 Drancy(FR)**

(72) Inventeur: **Kervagoret, Gilbert**
**5 Impasse Nobleterre**
**F-95100 Argenteuil(FR)**

(74) Mandataire: **Lejet, Christian**
**Bendix Europe Service Techniques Service**
**Brevets 126 rue de Stalingrad**
**F-93700 Drancy(FR)**

Rank Xerox (UK) Business Services

## Description

La présente invention concerne les servorégulateurs de pression pour installation hydraulique, notamment pour direction assistée de véhicule.

Dans une direction assistée hydraulique de véhicule il est souhaitable de modifier la pression de travail en fonction de la vitesse du véhicule afin de moduler sélectivement l'assistance.

Par exemple, à basses vitesses, lors d'une manoeuvre de parcage, le conducteur a besoin d'une assistance maximum, tandis qu'à vitesses élevées, il n'a besoin que d'une assistance réduite.

Il est également souhaitable de modifier le degré d'assistance en fonction de la charge du véhicule.

Dans le document US-A- 4,216,841 sont décrits des dispositifs associés à une direction assistée d'un véhicule et destinés à faire varier la pression du fluide hydraulique de travail fourni à la direction assistée en fonction respectivement de la vitesse du véhicule et en fonction de la charge.

La présente invention a pour objet de proposer un servo-régulateur de pression susceptible de fournir une pression de sortie qui varie en fonction d'au moins un signal électrique fonction de la vitesse ou la charge du véhicule, suivant un agencement simple, qui soit fiable et de faibles coûts de fabrication.

On connaît du document US-A-4 570 736 un tel dispositif dans lequel un tiroir commandé électriquement en fonction de la vitesse du véhicule ainsi équipé ouvre plus ou moins une dérivation pour le fluide hydraulique de travail lorsque la vitesse du véhicule est élevée. Aucun élément ne permet dans ce dispositif de réguler la pression du fluide hydraulique à la sortie du dispositif.

L'invention concerne donc un servorégulateur de pression hydraulique, destiné à fournir une pression de fluide hydraulique correspondant à un signal électrique donné, comprenant un motoréducteur relié à un moyen de valve disposé entre un circuit de fluide haute pression, et un orifice de sortie. Le moyen de valve comprend un tiroir monté à coulissement dans un premier alésage.

Selon l'invention, le premier alésage est formé dans un élément de fermeture d'un deuxième alésage dans lequel est monté à coulissement un piston déplaçable sous l'effet du motoréducteur, et une extrémité du tiroir s'étend en saillie à l'extérieur du premier alésage et prend appui à l'intérieur d'une cage montée à coulissement sur l'élément de fermeture à l'intérieur du deuxième alésage, la cage étant reliée au piston par un ressort, tandis que l'autre extrémité du tiroir est soumise à la pression régnant à l'orifice de sortie.

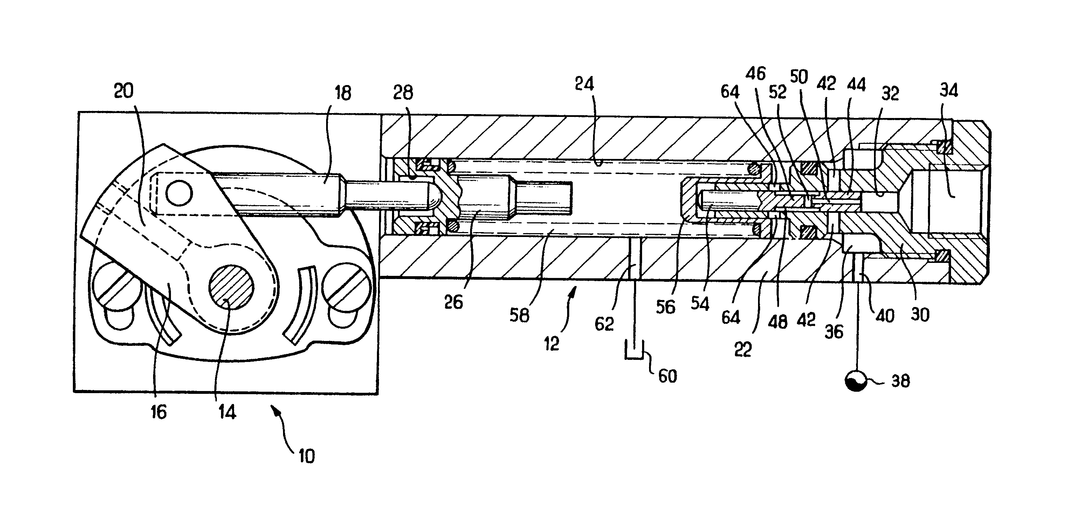

D'autres caractéristiques et avantages de la présente invention ressortiront de la description suivante d'un mode de réalisation, donné à titre illustratif mais nullement limitatif, faite en relation avec le dessin annexé, sur lequel :

La figure unique est une vue, partiellement en coupe longitudinale, d'un servorégulateur de pression selon la présente invention.

Comme représenté sur la figure, un servorégulateur de pression comprend un moteur électrique 10 et un distributeur haute pression 12. Le moteur électrique 10, qui dans l'exemple illustré est un motoréducteur, comprend un arbre 14 auquel est fixé un levier 16 sur lequel est monté à pivotement un poussoir 18.

L'arbre 14 est relié à un axe d'un potentiomètre de recopiage (non représenté) par exemple par l'intermédiaire d'un bras d'actionnement 20 fixé au levier 16. L'axe du potentiomètre est aligné avec celui du moteur 10.

Le distributeur haute pression 12 comprend un corps 22 comportant un alésage longitudinal étagé 24. Un piston 26 est monté à coulissement étanche dans l'alésage 24 et comporte une ouverture 28 dans laquelle est reçue l'extrémité libre du poussoir 18. Un élément de fermeture 30 est monté fixe dans l'alésage 24 et comprend un alésage longitudinal 32 relié à un orifice de sortie 34 destiné à être relié à un dispositif de direction assistée hydraulique (non représenté). Un espace annulaire 36, défini entre l'alésage 24 et l'élément de fermeture 30, est relié à une source de fluide hydraulique sous pression 38 par une ouverture 40 dans le corps 22 et à l'intérieur de l'alésage 32 par deux ouvertures 42 dans un élément de fermeture 30. Dans l'alésage 32 est monté à coulissement étanche un tiroir 44 dont une partie à section réduite 46 définit un espace annulaire 48 avec l'alésage 32. Un perçage longitudinal 50 communique avec l'espace annulaire 48 par une ouverture transversale 52. Une extrémité 54 du tiroir 44 s'étend en saillie à l'extérieur de l'alésage 32 et prend appui à l'intérieur d'une cage 56 montée à coulissement sur l'élément de fermeture 30. La cage 56 est reliée au piston 26 par un ressort 58. L'alésage 24 est en communication hydraulique avec un réservoir basse pression 60 par un passage 62 dans le corps 22. Dans la position de repos illustrée du dispositif, l'alésage 24 est en communication hydraulique avec l'alésage 32 de l'élément de fermeture 30 par deux ouvertures latérales 64 en recouvrement avec l'espace annulaire 48 du tiroir 44, et établit ainsi un passage entre le réservoir basse pression 60 et la sortie 34 par l'intermédiaire du perçage longitudinal 50.

Le fonctionnement du dispositif ainsi décrit est le suivant : en réponse à un signal électrique, qui peut être fonction de la vitesse ou la charge du véhicule, ou une combinaison des deux, le moteur électrique tourne d'un angle correspondant au signal électrique. Le potentiomètre étant incorporé dans un circuit de recopiage classique, il diminue et annule le potentiel appliqué au moteur suivant la rotation de l'arbre 14. Le moteur 10, et ainsi le levier 16, se mettent donc dans une position donnée correspondant au signal électrique reçu par le moteur.

La rotation dans le sens horaire du levier 16 (en regardant le dessin), entraîne un déplacement du poussoir 18, vers la droite qui déplace le premier piston 26 comprimant le ressort 58. L'action du ressort 58 sur la cage 56 entraîne le déplacement du tiroir 44 et la partie à section réduite 46 ferme d'abord le passage entre le réservoir basse pression 60 et la sortie 34 et ensuite, si le déplacement continue, ouvre le passage entre la source haute pression 38 et la sortie 34. La pression hydraulique dans l'alésage 32 excerce une contrepression s'opposant au déplacement du tiroir et ainsi, une rotation donnée du levier 16 crée une pression hydraulique correspondante à la sortie 34. De façon analogue, si le signal électrique provoque une rotation du moteur électrique en sens antihoraire (en regardant le dessin), le déplacement du poussoir 18 vers la gauche entraînant la fermeture du passage entre la source haute pression 38 et la sortie 34 et ouvrant le passage vers le réservoir basse pression 60, de sorte que la pression hydraulique à la sortie 34 chute.

Le motoréducteur 10 étant mécaniquement irréversible, un effort appliqué à l'arbre 14 ne peut provoquer une rotation du moteur. En cas de défaillance du circuit électrique, le moteur 10, et ainsi le tiroir 44, restent dans leur position définie précédemment. Une défaillance électrique n'entraîne pas de changement soudain dans le comportement de la direction assistée.

**Revendications**

1. Servorégulateur de pression hydraulique, destiné à fournir une pression de fluide hydraulique correspondant à un signal électrique donné, comprenant un motoréducteur (10) relié à un moyen de valve (12) disposé entre un circuit de fluide haute pression (38), et un orifice de sortie (34), le moyen de valve (12) comprenant un tiroir (44) monté à coulissement dans un premier alésage (32) caractérisé en ce que le dit premier alésage (32) est formé dans un élément de fermeture (30) d'un deuxieme alésage (24) dans lequel est monté à coulissement un piston (26) éplaçable sous l'effet du motoréducteur, et qu'une extrémité (54) du dit tiroir (44) s'étend en saillie à l'extérieur du dit premier alésage (32) et prend appui à l'intérieur d'une cage (56) montée à coulissement sur l'élément de fermeture (30) à l'intérieur du dit deuxième alésage (24), la cage (56) étant reliée au dit piston (26) par un ressort (58), tandis que l'autre extrémité du dit tiroir (44) est soumise à la pression régnant à l'orifice de sortie (34).

**Claims**

1. Hydraulic pressure servo-regulator, intended to supply a hydraulic fluid pressure corresponding to a given electrical signal, comprising a geared motor (10) connected to a valve means (12) arranged between a high-pressure fluid circuit (38), and an outlet port (34), the valve means (12) comprising a spool valve which is slidably mounted inside a first bore (32) characterised in that the said first bore (32) is formed in a closing element (30) of a second bore (24), in which is mounted slidably a piston (20) displaceable under the effect of the geared motor, and in that one end (54) of the said spool valve (44) extends in a projecting manner outside the said first bore (32) and bears on the inside of a cage (56) mounted slidably on the closing element (30) within the said second bore (24), the cage (56) being connected to the said piston (26) by means of a spring (58), whilst the other end of the said spool valve (44) is subjected to the pressure prevailing at the outlet port (34).

**Ansprüche**

1. Servo-Hydraulikdruckregler, der der Lieferung eines einem gegebenen elektrischen Signal entsprechenden Hydraulikfluiddruckes dient, mit einem Getriebemotor (10), der mit einem zwischen einem Hochdruck-Fluidleitungssystem (38) und einer Auslaßöffnung (34) angeordneten Ventilmittel (12) verbunden ist, wobei das Ventilmittel (12) einen in einer ersten Bohrung (32) gleitend angebrachten Schieber umfaßt, dadurch gekennzeichnet, daß die erste Bohrung (32) in einem Verschlußelement (30) einer zweiten Bohrung (24) ausgebildet ist, in der ein unter der Wirkung des Getriebemotors verschiebbarer Kolben (26) gleitend angebracht ist, und daß sich ein Ende (54) des Schiebers (44) aus der ersten Bohrung (32) heraus erstreckt und sich im Inneren eines am Verschlußelement (30) im Inneren der zweiten Bohrung (24) gleitend angebrachten Gehäuses (56) abstützt, wobei das Gehäuse (56) mit dem Kolben (26) mittels einer Feder (58) in Kontakt gebracht wird, während das andere Ende des Schiebers (44) dem an der Auslaßöffnung (34) herrschenden Druck ausgesetzt wird.